# EUROPEAN PATENT SPECIFICATION

(11) **EP 2 530 772 B1**
(45) Date of publication and mention of the grant of the patent: **07.09.2016**
(21) Application number: 11737041.1
(22) Date of filing: 26.01.2011
(51) Int. Cl.: H01M 8/1213, H01M 8/1226, H01M 8/0236

(54) **FUEL CELL, FUEL CELL DEVICE, FUEL CELL MODULE, AND FUEL CELL APPARATUS**
BRENNSTOFFZELLE, BRENNSTOFFZELLENVORRICHTUNG, BRENNSTOFFZELLENMODUL UND BRENNSTOFFZELLENSYSTEM
PILE À COMBUSTIBLE, DISPOSITIF DE PILE À COMBUSTIBLE, MODULE DE PILE À COMBUSTIBLE ET SYSTÈME DE PILE À COMBUSTIBLE

(30) Priority: 26.01.2010 JP 2010014071
(43) Date of publication of application: 05.12.2012
(73) Proprietor: Kyocera Corporation, Kyoto-shi, Kyoto 612-8501 (JP)
(72) Inventor: HORI,Yuuichi, Kirishima-shi Kagoshima 899-4312 (JP); FUJIMOTO,Tetsurou, Kirishima-shi Kagoshima 899-4312 (JP); KAWAKAMI,Masashi, Kirishima-shi Kagoshima 899-4312 (JP)
(74) Representative: Viering, Jentschura & Partner mbB Patent- und Rechtsanwälte
(86) International application number: PCT/JP2011/051477
(87) International publication number: WO 2011/093328

(56) References cited:
- EP-A1- 1 788 653
- EP-A1- 2 061 108
- WO-A1-2007/086346
- WO-A1-2008/143657
- JP-A- 2004 253 376
- JP-A- 2007 012 423
- JP-A- 2008 204 936
- JP-A- 2008 226 762

## Description

### Technical field

The present invention relates to a fuel cell, a fuel cell device constructed by electrically connecting a plurality of fuel cells in series, a fuel cell module constructed by placing the fuel cell device in a housing, and a fuel cell apparatus equipped with the fuel cell module.

### Background Art

In recent years, a cell stack constructed by arranging a plurality of fuel cells capable of providing electricity by utilizing fuel gas (hydrogen-containing gas) and air (oxygen-containing gas) is known as a next-generation energy source. Also, various types of fuel cell modules and fuel cell apparatuses have been proposed to date, the former being constructed by placing the cell stack in a housing, while the latter being constructed by placing the fuel cell module in an external case.

Such a fuel cell is constructed by arranging, on one of a pair of main surfaces of a support which contains Ni(NiO) and has gas flow channels which are disposed in an interior of the support, a fuel electrode layer containing Ni(NiO), a solid electrolyte layer, and an air electrode layer successively in the order named, and also arranging, on the other one of the main surfaces, an interconnector which undergoes expansion and shrinkage in a reduction atmosphere.

In the fuel cell thus constructed, in order to reduce NiO contained in the support and the fuel electrode layer to Ni, there is a need to carry out reduction treatment by feeding hydrogen-containing gas to the gas flow channels of the support.

It is a known fact that, in a fuel cell in which a sintered lanthanum chromite-based material is used as a major constituent of an interconnector, deformation, specifically expansion takes place during reduction treatment (hereafter referred to as "reduction-induced expansion"). With the reduction-induced expansion of the interconnector, the fuel cell may become deformed to such an extent that its interconnector side is convexly and arcuately curved. Also, it is a known fact that, in a fuel cell in which a sintered strontium titanate-based material is used as a major constituent of an interconnector, deformation, specifically shrinkage takes place during reduction treatment (hereafter referred to as "reduction-induced shrinkage"). With the reduction-induced shrinkage, the fuel cell may become deformed to such an extent that its interconnector side is concavely and arcuately curved. Therefore, in the interest of protection of a fuel cell from deformation, there are provided: a fuel cell having an interconnector containing a metal element solid solution; a fuel cell having an interconnector which is smaller in area than a support; a fuel cell having an interconnector reinforced with a layer made of a solid electrolyte layer material; and a fuel cell in which its solid electrolyte layer and interconnector are made of a material which expands in a reduction atmosphere (refer to Patent Literatures 1 to 4, for example)

EP 1 788 653 A1 describes a fuel cell with a fuel electrode including zirconia, an interconnector film made of lanthanum chromite-based perovskite type oxide which includes calcium in its composition and onto the interconnector film a protective layer is formed using La_{0.6}Sr_{0.4}MnO₃. An intermediate layer is laid between the interconnector film and the fuel electrode covering the whole region between the interconnector and the fuel electrode.

EP 2 061 108 A1 discloses a fuel cell with a substrat with one surface covered by a layer while the layer is covered by an interconnector. The fuel cell includes the solid electrolyte containing Zr, an intermediate layer and an oxygen-side electrode that are disposed in this order on one surface of the solid electrolyte, and a fuel-side electrode disposed on the other surface opposed to the oxygen-side electrode of the solid electrolyte. The intermediate layer includes a surface layer region that contains Zr and is on a side of the solid electrolyte and another region except the surface layer region that does not contain Zr.

WO 2008/143657 A1 discloses a solid oxide fuel cell containing a plurality of sub-cells while each sub-cell includes first electrodes and second electrodes.

JP 2008 204936 A discloses an interconnector for a solid oxide fuel cell which is formed by a first layer acquired by sintering a first layer material in which niobium titanate particles represented by a general expression of Ti₍ₓ₁₎Nb₍₁₋ₓ₁₎O and calcium titanate particles represented by a general expression of Ca₍ₓ₂₎A₍₁₋ₓ₂₎Ti_{(y2)}D_{(1-y2)}O₃ are mixed at a mass ratio of 70:30 to 100:0 and a second layer acquired by sintering powdered lanthanum chromite particles represented by a general expression of La₍ₓ₃₎E₍₁₋ₓ₃₎Cr_{(y3)}G_{(1-y3)}O₃.

### Citation List

### Patent Literature

Patent Literature 1: Japanese Unexamined Patent Publication JP-A 2007-12423
Patent Literature 2: Japanese Unexamined Patent Publication JP-A 2007-35451
Patent Literature 3: Japanese Unexamined Patent Publication JP-A 2007-123005
Patent Literature 4: Japanese Unexamined Patent Publication JP-A 2007-200761

### Summary of Invention

### Technical Problem

The fuel cells disclosed in Patent Literatures 1 to 4, while being capable of suppression of deformation, are still susceptible to improvement.

Hence, an object of the invention is to provide a fuel cell capable of suppressing deformation resulting from reduction treatment, a fuel cell device, a fuel cell module, and a fuel cell apparatus.

### Solution to Problem

The invention provides a fuel cell, comprising:
a support having gas flow channels which are disposed in an interior of the support, for passage of fuel gas along its lengthwise direction, the support being shaped into a flat plate having a pair of opposed main surfaces;
a fuel electrode layer, a solid electrolyte layer and an air electrode layer which are disposed on one main surface of the pair of opposed main surfaces of the support in the order named;
an interconnector made of a sintered body composed predominantly of lanthanum chromite, the interconnector being disposed on the other main surface of the pair of opposed main surfaces of the support; and
an adjustment layer made of a sintered body composed predominantly of perovskite-type oxide containing Ti or a sintered body composed predominantly of oxide of Ni and Mg, the adjustment layer being placed in only part of a region lying between the interconnector and the support, the area in which the adjustment layer is placed being only at each end of the other main surface in its widthwise direction.

The invention provides a fuel cell, comprising:
a support having gas flow channels which are disposed in an interior of the support, for passage of fuel gas along its lengthwise direction, the support being shaped into a flat plate having a pair of opposed main surfaces;
a fuel electrode layer, a solid electrolyte layer and an air electrode layer which are disposed on one main surface of the pair of opposed main surfaces of the support in the order named;
an interconnector made of a sintered body composed predominantly of lanthanum chromite, the interconnector being disposed on the other main surface of the pair of opposed main surfaces of the support; and
an adjustment layer made of a sintered body composed predominantly of perovskite-type oxide containing Ti or a sintered body composed predominantly of oxide of Ni and Mg, the adjustment layer being placed in only part of a region lying between the interconnector and the support, the area in which the adjustment layer is placed being only in a midportion of the other main surface in its widthwise direction.

The invention provides a fuel cell, comprising:
a support having gas flow channels which are disposed in an interior of the support, for passage of fuel gas along its lengthwise direction, the support being shaped into a flat plate having a pair of opposed main surfaces;
a fuel electrode layer, a solid electrolyte layer and an air electrode layer which are disposed on one main surface of the pair of opposed main surfaces of the support in the order named;
an interconnector made of a sintered body composed predominantly of lanthanum chromite, the interconnector being disposed on the other main surface of the pair of opposed main surfaces of the support; and
an adjustment layer made of a sintered body composed predominantly of perovskite-type oxide containing Ti or a sintered body composed predominantly of oxide of Ni and Mg, the adjustment layer being placed in only an inside of the interconnector, the area in which the adjustment layer is placed being only in a midportion of the other main surface in its widthwise direction.

The invention provides a fuel cell device, comprising a plurality of the fuel cells electrically connected in series.

The invention provides a fuel cell module, comprising: the fuel cell device; and a housing, the fuel cell device being placed in the housing.

The invention provides a fuel cell apparatus, comprising: the fuel cell module; an auxiliary machine configured to operate the fuel cell module; and an external case, the fuel cell module and the auxiliary machine being placed in the external case.

### Advantageous Effects of Invention

According to the invention, with the provision of the adjustment layer which becomes deformed differently from the interconnector in a reduction atmosphere, even if the reduction-induced expansion or reduction-induced shrinkage of the interconnector takes place, the extent of deformation of the interconnector can be lessened, thereby suppressing deformation of the fuel cell.

### Brief Description of Drawings

Figs. 1(a) and 1(b) are views showing one embodiment of a fuel cell according to the invention, wherein Fig. 1(a) is a transverse section view of the fuel cell, and Fig. 1(b) is a partial cutaway perspective view of the fuel cell;
Fig. 2(a) is a transverse section view of another embodiment of the fuel cell according to the invention, and Fig. 2(b) is a transverse section view of further another embodiment of the fuel cell according to the invention;
Fig. 3(a) is a plan view showing the fuel cell depicted in Fig. 1, with an interconnector omitted, and Fig. 3(b) is a plan view showing the fuel cell depicted in Fig. 2, with an interconnector omitted;
Figs. 4(a) and 4(b) are views showing an embodiment of a cell stack device according to the invention, wherein Fig. 4(a) is a side view schematically showing the cell stack device, and Fig. 4(b) is an enlarged plan view of part of the cell stack device shown in Fig. 4(a) surrounded by a dotted circle;
Fig. 5 is an external perspective view showing an embodiment of a fuel cell module according to the invention;
Fig. 6 is an exploded perspective view showing an embodiment of a fuel cell apparatus according to the invention, with parts omitted;
Fig. 7 is a schematic diagram for explaining deformation of the fuel cell; and
Fig. 8(a) to 8(c) are conceptual diagrams showing a method for measuring an amount of warpage of the fuel cell, wherein Fig. 8(a) shows a curve indicative of warpage as observed before reduction treatment, Fig. 8(b) shows a curve indicative of warpage as observed after reduction treatment, and Fig. 8(c) shows the before-reduction warpage curve and the after-reduction warpage curve placed in superposed relation with the ends in registry.

### Description of Embodiments

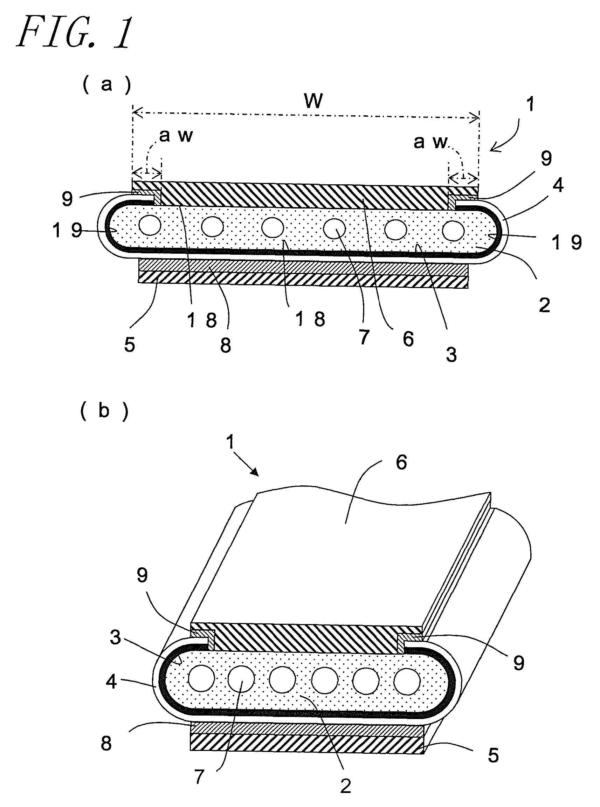

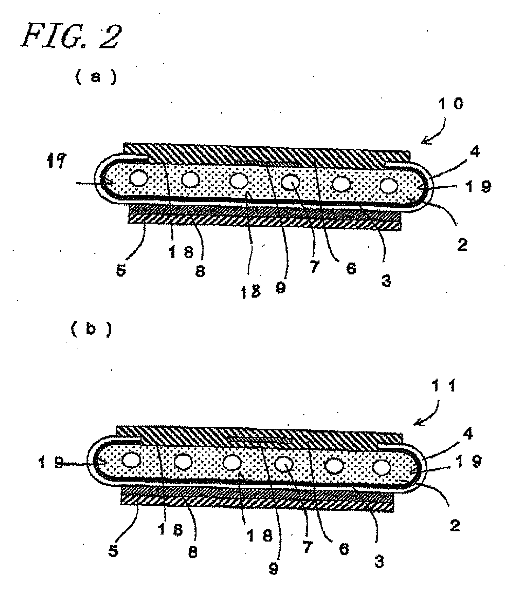

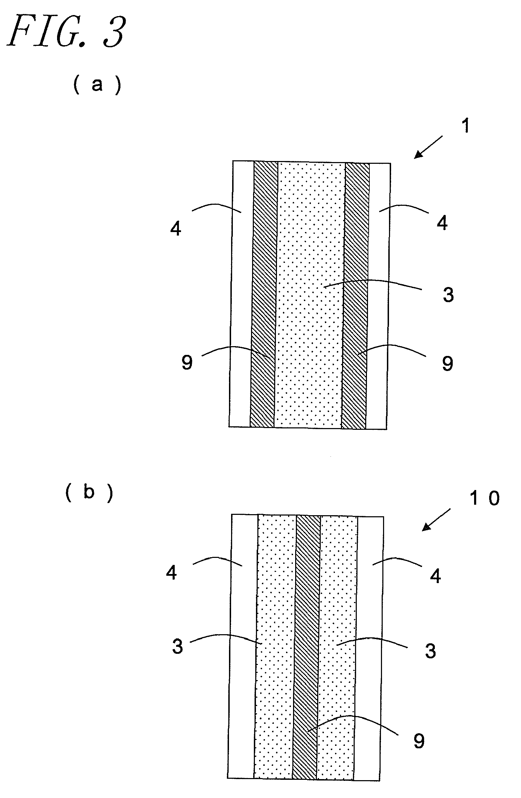

Figs. 1(a) and 1(b) are views showing one embodiment of a fuel cell according to the invention, wherein Fig. 1(a) is a transverse section view of the fuel cell, and Fig. 1(b) is a partial cutaway perspective view of the fuel cell. Figs. 2(a) and 2(b) are each a view in transverse section of another embodiment of the fuel cell according to the invention. Moreover, Fig. 3(a) is a plan view showing the fuel cell depicted in Fig. 1, with an interconnector omitted, and Fig. 3(b) is a plan view showing the fuel cell depicted in Fig. 2, with an interconnector omitted. Note that, in either of these figures, part of the constituent components of the fuel cell 1, as well as the fuel cell 10, is illustrated in an enlarged state, for example. Moreover, in what follows, like structural components are denoted by similar reference numerals or symbols. Further, the explanation of the structure of the fuel cell will be based on the fuel cell 1 shown in Fig. 1. Note that the fuel cell 1 shown in Fig. 1 and the fuel cell 10 shown in Figs. 2(a) and 2(b) have basically the same structure, the only difference being the position of placement of an adjustment layer 9 which will hereafter be described.

The fuel cell 1 includes a flat-shaped electrically conducting support 2 (hereafter occasionally referred to as the support 2) which is in the general form of a column (more specifically, an elliptic cylinder). In the interior of the support 2, a plurality of (six pieces, in Fig. 1) gas flow channels 7 for passage of fuel gas along a lengthwise direction thereof, are disposed at predetermined intervals. The fuel cell 1 is constructed by disposing various structural components on the support 2. Note that the gas flow channel 7 is so disposed as to pass all the way through from one end to the other end of the support 2 in the lengthwise direction.

As will be understood from the construction shown in Fig. 1, the support 2 is composed of a pair of parallel main surfaces 18 and arcuate surfaces (side surfaces) 19 each acting as the connection between the pair of main surfaces 18.

On one main surface 18 of the support 2 is disposed a stacked body in which a fuel electrode layer 3 provided as an inner electrode, a solid electrolyte layer 4, and an air electrode layer 5 provided as an outer electrode are stacked successively in the order named. Moreover, on the other main surface 18 are disposed an adjustment layer 9 made of a sintered body composed predominantly of perovskite-type oxide containing Sr and Ti (hereafter also referred to as "strontium titanate") as will hereafter be described and an interconnector 6 made of a sintered body composed predominantly of lanthanum chromite. The adjustment layer 9 undergoes reduction-induced shrinkage in a reduction atmosphere, whereas the interconnector 6 undergoes reduction-induced expansion in a reduction atmosphere.

In the fuel cell 1 shown in Fig. 1, the fuel electrode layer 3, as well as the solid electrolyte layer 4, has its opposite ends extended from the top of one main surface 18, through their respective arcuate surfaces 19, to the other main surface 18, so that the fuel electrode layer 3 and the solid electrolyte layer 4 are each adjacent to the interconnector 6, with the adjustment layer 9 lying between them. Note that, in the fuel cell 1 shown in Fig. 1, on the solid electrolyte layer 4 situated on one main surface 18 of the support 2, the air electrode layer 5 is placed face-to-face with the fuel electrode layer 3 (more specifically, the interconnector 6), with an intermediary layer 8 lying between them. In the following description, the inner electrode will be defined as the fuel electrode layer 3, and the outer electrode will be defined as the air electrode layer 5 unless otherwise specified.

In the fuel cell 1, the confronting regions of the fuel electrode layer 3 and the air electrode layer 5 serve as an electrode for electricity generation. That is, the confronting regions of the fuel electrode layer 3 and the air electrode layer 5 function as an electricity-generating section. Electricity generation is effected by passing oxygen-containing gas such as air externally of the air electrode layer 5, passing fuel gas (hydrogen-containing gas) through the gas flow channel 7 formed within the support 2, and heating to a predetermined operating temperature. Electric current resulting from the electricity generation operation is collected via the interconnector 6 disposed on the other main surface 18 of the support 2.

In the fuel cell 1 shown in Fig. 1, the adjustment layer 9 covers each of the opposite ends of the fuel electrode layer 3 as well as the solid electrolyte layer 4, and the interconnector 6 covers the upper surface of the adjustment layer 9 and the other main surface 18 of the support 2. That is, the adjustment layer 9 is interposed between the electrically conducting support 2 and the interconnector 6, thereby preventing exposure of the surface of the support 2 to the outside. Note that the fuel cell can be so designed that the fuel electrode layer 3 is formed only in a region facing the air electrode layer 5, and the other region is covered with the solid electrolyte layer 4.

Moreover, as shown in Fig. 3(a), the fuel electrode layer 3, the solid electrolyte layer 4, the interconnector 6, and the adjustment layer 9 are each so disposed as to extend from one end to the other end of the support 2 in the lengthwise direction. The air electrode layer 5 is disposed in part of the fuel cell 1 other than one end and the other end in the lengthwise direction thereof, and the air electrode layer-free region constitutes a non-electricity-generating section.

In the fuel cell 1 thus constructed, since the support 2 has the form of a flat plate having a pair of opposed main surfaces 18, it is possible to increase the area of the electricity-generating section placed on the support 2, and thereby increase the amount of electricity generation per unit volume.

Moreover, in the fuel cell 10 shown in Fig. 2(a), an adjustment layer 9 made of a sintered body composed predominantly of strontium titanate is placed in a midportion of the other main surface 18 of the support 2 in the direction of arrangement of the gas flow channels 7. Further, in the fuel cell 11 shown in Fig. 2(b), an adjustment layer 9 made of a sintered body composed predominantly of strontium titanate is placed within the interconnector 6 so as to lie over the midportion of the other main surface 18 of the support 2 in the direction of arrangement of the gas flow channels 7.

Hereinafter, each of the members constituting the fuel cell 1 will be explained.

The support 2 is required to have gas-permeable properties to allow fuel gas flowing through the interior of the gas flow channel 7 to permeate the fuel electrode layer 3, as well as to have electrically-conductive properties to collect electricity via the interconnector 6. It is therefore preferable that the support 2 is made of at least one of Ni and NiO, and specific rare earth oxide.

The specific rare earth oxide is used to approximate the thermal expansion coefficient of the support 2 to the thermal expansion coefficient of the solid electrolyte layer 4. Rare earth oxide containing at least one of those selected from a group consisting of Y, Lu (lutetium), Yb, Tm (thulium), Er (erbium), Ho (holmium), Dy (dysprosium), Gd, Sm, and Pr (praseodymium) can be used in combination with at least one of Ni and NiO. Specific examples of such a rare earth oxide include: Y₂O₃; Lu₂O₃; Yb₂O₃; Tm₂O₃; Er₂O₃; HO₂O₃; Dy₂O₃; Gd₂O₃; Sm₂O₃; and Pr₂O₃. In particular, Y₂O₃ and Yb₂O₃ are desirable for use. This is because they exhibit little solid solubility with at least one of Ni and NiO, react hardly with at least one of Ni and NiO, are substantially equal to the solid electrolyte layer 4 in respect of thermal expansion coefficient, and are not expensive.

Moreover, in the support 2, in order to maintain its high level of electrical conductivity, as well as to approximate its thermal expansion coefficient to the thermal expansion coefficient of the solid electrolyte layer 4, it is preferable that the ratio by volume between Ni and rare earth oxide (for example, the ratio by volume between Ni and Y₂O₃) as observed after firing-reduction process falls within a range of 35:65 to 65:35 (Ni/(Ni + Y) falls within a range of 65% to 86% in terms of mole ratio). Note that the support 2 can contain any other metal component or oxide component in so far as the required characteristics will not be impaired.

Moreover, being required to have gas-permeable properties, the support 2 should preferably have a porosity of greater than or equal to 30%, in particular, a porosity in a range of 35% to 50% under normal circumstances. Further, the electrical conductivity of the support 2 is greater than or equal to 50 S/cm, preferably greater than or equal to 300 S/cm, and more preferably greater than or equal to 440 S/cm.

It is preferable that the widthwise dimension (length) of the main surface 18 of the support 2 (the length of the support 2 in the direction of arrangement of the gas flow channels 7) falls within a range of 15 mm to 35 mm; the length of the arcuate surface 19 (arc length) falls within a range of 2 mm to 8 mm; and the thickness of the support 2 (the dimension of the region between the main surfaces n) falls within a range of 1.5 mm to 5 mm under normal circumstances. This makes it possible to ensure electricity collection capability while maintaining a certain degree of strength.

The fuel electrode layer 3, which acts to cause an electrode reaction, can be made of at least one of Ni and NiO, which are iron-group metals, and ZrO₂ solid solution containing a rare earth element. As the rare earth element, the rare earth element as already mentioned by way of example in the description of the support 2 (Y, for example) can be used.

In the fuel electrode layer 3, the content of at least one of Ni and NiO and the content of ZrO₂ solid solution containing a rare earth element are preferably such as to ensure that the ratio by volume between Ni and ZrO₂ solid solution containing a rare earth element (for example, NiO:YSZ) as observed after firing-reduction process falls within a range of 35:65 to 65:35. Moreover, the fuel electrode layer 3 preferably has a porosity of greater than or equal to 15%, in particular, a porosity in a range of 20% to 40% from the viewpoint of ensuring its electricity generation capability and suppressing accidental separation or cracking caused by the difference in thermal expansion coefficient from the solid electrolyte layer 4. The fuel electrode layer 3 preferably has a thickness in a range of 1 µm to 30 µm.

It is desirable to use high-density ceramics made of partially stabilized or stabilized ZrO₂ containing a rare earth element such as Y (yttrium), Sc (scandium), and Yb (ytterbium) in an amount of 3% to 15% by mole for the solid electrolyte layer 4. Moreover, Y is desirable for use as the rare earth element from the standpoint of inexpensiveness. Further, the solid electrolyte layer 4 is preferably designed to have a dense nature with a relative density (according to the Archimedes' method) of 93% or above, in particular 95% or above in the interest of prevention of gas permeation, and have a thickness in a range of 5 µm to 50 µm.

It is noted that an intermediary layer 8 can be interposed between the solid electrolyte layer 4 and the air electrode layer 5 for the purpose of strengthening the connection between the solid electrolyte layer 4 and the air electrode layer 5 and suppressing formation of a reaction layer having high electrical resistance resulting from the reaction of the components constituting the solid electrolyte layer 4 and the components constituting the air electrode layer 5. The fuel cell 1 shown in Fig. 1 is illustrated as having the intermediary layer 8.

The intermediary layer 8 can be formed of an oxide of Ce (cerium) or can be designed to have a composition of Ce and other different rare earth element. Exemplary of the composition of Ce and other rare earth element is a composition defined by the formula of (CeO₂)₁₋ₓ(REO_{1.5})ₓ (wherein RE represents at least one of Sm, Y, Yb, and Gd, and x represents a number which fulfills the condition of 0 < x ≤ 0.3). Moreover, in the interest of reduction of electrical resistance, Sm and Gd can be used as RE. For example, CeO₂ solid solution containing SmO_{1.5} or GdO_{1.5} in an amount of 10% to 20% by mole can be adopted for use. Note that the intermediary layer 8 may have a double-layer structure. In this case, the intermediary layer 8 is preferably obtained by forming the first layer together with the solid electrolyte layer 4 through co-firing process, and whereafter forming the second layer separately at a temperature which is more than 200°C lower than the temperature set for the co-firing.

Moreover, since the air electrode layer 5 is required to have gas-permeable properties, it is preferable that the electrically conducting ceramics (perovskite-type oxide) constituting the air electrode layer 5 has a porosity of greater than or equal to 20%, in particular, a porosity in a range of 30% to 50%. Further, the air electrode layer 5 preferably has a thickness in a range of 30 µm to 100 µm in light of electricity collection capability.

The air electrode layer 5 is preferably formed of electrically conducting ceramics made of a sintered body composed predominantly of so-called ABO₃-type perovskite oxide. It is desirable to use transition metal perovskite oxide, in particular, at least one of those having Sr (strontium) and La (lanthanum) coexisting in the A-site, namely LaSrCoFeO₃ (for example, LaSrCoFeO₃), LaMnO₃ (for example, LaSrMnO₃), LaFeO₃ (for example, LaSrFeO₃), and LaCoO₃ (for example, LaSrCoO₃). The use of LaSrCoFeO₃-based oxide is particularly desirable because of providing high electrical conductivity at an operating temperature of about 600°C to 1000°C. Note that the aforementioned perovskite oxide may contain, in addition to Co (cobalt), Fe (iron) and Mn (manganese) in the B-site.

The interconnector 6 is preferably formed of electrically conducting ceramics. In this regard, however, being exposed to fuel gas (hydrogen-containing gas) and oxygen-containing gas, the interconnector 6 needs to have resistance to reduction and resistance to oxidation. For the sake of providing reduction resistance and oxidation resistance, and approximating its thermal expansion coefficient to the thermal expansion coefficients of the support 2 and the solid electrolyte layer 4, the interconnector 6 is made of a sintered body composed predominantly of lanthanum chromite. Note that the interconnector 6 including lanthanum chromite as a major constituent means that the interconnector 6 contains lanthanum chromite in an amount of greater than or equal to 60% by mole. Moreover, in the interconnector 6, to enhance its electrical conductivity and to approximate its thermal expansion coefficient to those of the support 2 and the solid electrolyte layer 4, other different element (for example, Ca, Sr, Mg, Ni, Co, etc.) can be contained in lanthanum chromite solid solution, and also oxide of such elements can be added on an as needed basis.

Moreover, part of the interconnector 6 which is disposed in non-overlapping relation to the fuel electrode layer 3, the solid electrolyte layer 4, and the adjustment layer 9 preferably has a thickness in a range of 10 µm to 50 µm in the interest of prevention of gas leakage and prevention of an increase in electrical resistance.

From the standpoint of gas leakage prevention, the interconnector 6 needs to have a dense nature. The density of the interconnector 6 is preferably 92% or above, and more preferably 95% or above in terms of relative density according to the Archimedes' method.

Moreover, although not represented graphically, it is desirable to form a P-type semiconductor layer on the outer surface (top surface) of the interconnector 6. By connecting an electricity collecting member (not shown in the figures) to the interconnector 6 via the P-type semiconductor layer, it is possible to establish ohmic contact between them and thereby lessen the degree of potential drop. In consequence, deterioration in electricity collection capability can be avoided effectively.

Exemplary of such a P-type semiconductor layer is a layer made of transition metal perovskite oxide. Specifically, it is possible to use P-type semiconductor ceramics made of highly electron-conductive oxide, for example, at least one of those having Mn, Fe, Co, or the like in the B-site, namely LaMnO₃-based perovskite oxide (lanthanum manganite), LaFeO₃-based perovskite oxide (lanthanum ferrite), LaCoO₃-based perovskite oxide (lanthanum cobaltite), and the like. Under normal circumstances, the P-type semiconductor layer preferably has a thickness in a range of 30 µm to 100 µm.

In order to initiate operation of the fuel cell 1 for electricity generation, NiO contained in the support 2 and the fuel electrode layer 3 has to be reduced to Ni. In the course of reduction treatment, the interconnector 6 composed predominantly of lanthanum chromite may undergo expansion; that is, reduction-induced expansion may take place. More specifically, as fuel gas (hydrogen-containing gas) flowing through the gas flow channel 7 is diffused in the interior of the porous support 2, the interconnector 6 is exposed to the fuel gas, whereupon the interconnector 6 is put under a reduction atmosphere. Therefore, presumably, the element such for example as Cr contained in the interconnector 6 is reduced with a consequent deficiency of oxygen, thus causing expansion of crystalline lattice that will result in occurrence of reduction-induced expansion in the interconnector 6.

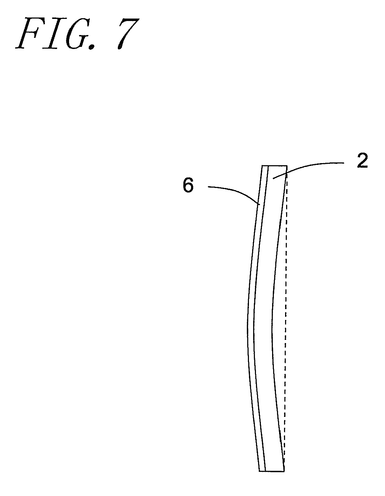

With the reduction-induced expansion of the interconnector 6, the fuel cell 1 becomes deformed to such an extent that, for example, its interconnector 6 side is convexly and arcuately curved (refer to Fig. 7). Should deformation such as the above warpage be encountered, the fuel cell 1 may sustain damage such as cracking, and also accidental separation of the constituent components placed on the support 2 may take place.

Accordingly, in the fuel cells 1, 10, and 11 shown in Figs. 1 and 2, on the other main surface 18 of the support 2 is disposed the adjustment layer 9 made of a sintered body composed predominantly of strontium titanate which undergoes reduction-induced shrinkage.

Exemplary of the material for the adjustment layer 9 is a sintered body composed predominantly of Ti-containing perovskite oxide, more specifically, a CaTiO₃-based material, a BaTiO₃-based material, a MgTiO₃-based material, and a SrTiO₃-based material. Such an oxide has the property of shrinking during reduction. It is also possible to use oxide of a type in which a rare earth element is substituted in part for the A-site or B-site thereof.

Exemplary of a rare earth element which is subjected to A-site substitution are La, Y, and the like, and exemplary of a rare earth element which is subjected to B-site substitution is Nb. By effecting substitution of a rare earth element at the A-site or B-site, it is possible to approximate the thermal expansion coefficient of the adjustment layer to that of the member constituting the fuel cell 1, such as the interconnector 6 and the support 2. In what follows, there is shown an example using strontium titanate solid solution containing La in part of the A-site (hereafter also referred to simply as "strontium titanate") for the adjustment layer 9.

Strontium titanate has the property of reduction-induced shrinkage. Therefore, with the provision of the adjustment layer 9 composed predominantly of strontium titanate between the interconnector 6 formed on the other main surface 18 of the support 2 and the support 2, or in the interior of the interconnector 6, during reduction treatment, it is possible to suppress reduction-induced expansion of the interconnector 6, and thereby protect the fuel cell 1 from deformation. That is, since the adjustment layer 9 which undergoes reduction-induced shrinkage acts to mechanically suppress deformation of the interconnector 6 resulting from reduction-induced expansion, it is possible to protect the fuel cell 1 from deformation. Note that, as strontium titanate solid solution containing La in part of the A-site, a substance defined by: (LaₓSr₁₋ₓ) TiO₃ (wherein x represents a number which fulfills the condition of 0 < x ≤ 0.3) can be used. Other different element can be contained in strontium titanate for use in so far as the property of developing reduction-induced shrinkage during reduction treatment will not be impaired. Moreover, the adjustment layer can be designed to contain, in addition to strontium titanate, other different component in so far as the property of developing reduction-induced shrinkage during reduction treatment will not be impaired. In this case, the content of strontium titanate is preferably greater than or equal to 90% by mole. It is more preferable that the adjustment layer is composed solely of strontium titanate.

While the fuel cell 1 is illustrated as having the adjustment layer 9 located between the interconnector 6 and the support 2, the adjustment layer 9 can be formed on the surface of the interconnector 6. Also in this case, the interconnector 6 becomes reduced upon contact with the support 2 with a consequent deficiency of oxygen in lanthanum chromite constituting the interconnector 6, thus causing development of oxygen vacancy. As the oxygen vacancy is developed so as to extend from the interconnector 6 to the adjustment layer 9, the adjustment layer 9 undergoes reduction-induced shrinkage. This makes it possible to suppress deformation of the fuel cell 1.

The adjustment layer 9 made of a sintered body composed predominantly of strontium titanate, while exhibiting high electrical conductivity in a reduction atmosphere, may incur a drop in electrical conductivity as it is oxidized. Therefore, the adjustment layer 9 is preferably formed so as to avoid exposure to air (oxygen), and is thus preferably formed between the interconnector 6 and the support 2, or in the interior of the interconnector 6. This makes it possible to suppress a decrease in the efficiency of collection of electric current generated by the staked body placed on one main surface 18 of the support 2 (that is, a decrease in the output density of the fuel cell 1). While the fuel cell 1 shown in Fig. 1 is illustrated as being so configured that the adjustment layer 9 is located between the interconnector 6 and the support 2 and the interconnector 6 covers the top surface of the adjustment layer 9, the interconnector 6 can be so placed as to cover the adjustment layer 9 as a whole (refer to Fig. 2(b). Moreover, in the interest of direct exposure to a reduction atmosphere, it is preferable that the adjustment layer 9 is formed on the surface of the support 2 while being covered at its top surface with the interconnector 6. This allows the adjustment layer 9 to undergo reduction-induced shrinkage for suppression of reduction-induced expansion of the interconnector 6 (refer to Fig. 2(a)).

Since strontium titanate (the adjustment layer 9) is lower in electrical conductivity (higher in resistance) in an oxidizing atmosphere than lanthanum chromite (the interconnector 6), it is desirable to dispose the adjustment layer 9 so as to exert little influence on electricity collection by the interconnector 6. Therefore, in the fuel cell 1 shown in Fig. 1, the adjustment layer 9 is placed at each end of the other main surface 18 of the support 2 in the direction of arrangement of the gas flow channels 7, with part of each of the adjustment layers 9 located on an end of the solid electrolyte layer 4 formed so as to extend over the other main surface 18. In other words, the adjustment layers 9 are so disposed as to cover the opposite ends of the fuel electrode layer 3 and the opposite ends of the solid electrolyte layer 4. This makes it possible to suppress deformation of the fuel cell 1, as well as to suppress a decrease in the efficiency of electricity collection by the interconnector 6.

Moreover, since strontium titanate (the adjustment layer 9) is lower in electrical conductivity in an oxidizing atmosphere than lanthanum chromite (the interconnector 6), it is desirable to dispose the adjustment layer 9 in such a manner that the width (aw) thereof in the direction of arrangement of the gas flow channels 7 (where the adjustment layer 9 is disposed at two locations just as with the fuel cell 1 shown in Fig. 1, the sum of the widths of the two adjustment layers) is equal to one-tenth to one-half part of the width (w) of the other main surface 18 in a direction aligned with the direction of arrangement of the gas flow channels 7. This makes it possible to suppress deformation of the fuel cell 1, as well as to mitigate the influence on electricity collection by the interconnector 6.

Further, in the interest of mitigation of the influence on electricity collection by the interconnector 6, the adjustment layer 9 is preferably so disposed that the thickness thereof is equal to one-sixth to four-sixth part of the thickness of the interconnector 6.

It is advisable to determine the width and thickness of the adjustment layer 9 in conformity with the structure of the fuel cell 1, with consideration given to suppression of reduction-induced expansion of the interconnector 6 and the influence on electricity collection by the interconnector 6.

There is no need to render the adjustment layer 9 dense in texture in so far as it is disposed while being covered with the interconnector 6. However, in the case of disposing the adjustment layer 9 in an exposed condition, it needs to have a dense nature from the standpoint of gas leakage prevention. The density of the adjustment layer 9 is preferably 92% or above, more preferably 95% or above in terms of relative density according to the Archimedes' method.

Another example of the material for the adjustment layer 9 is a sintered body composed predominantly of oxide of Ni and Mg which has a rock-salt structure. While NiO constitutes a compound together with MgO, in a reduction atmosphere, NiO is reduced to Ni, in consequence whereof there results reduction-induced shrinkage of the adjustment layer 9.

It is preferable that the mole ratio between Ni and Mg contained in the adjustment layer 9 falls within a range of 20:80 to 4:96. By adjusting the mole ratio within a range of 20:80 to 50:50, deformation resulting from reduction-induced expansion of the interconnector 6 can be suppressed. For example, the mole ratio between Ni and Mg can be derived through EPMA-based analysis.

In the case of forming the adjustment layer 9 from oxide of Ni and Mg, it is advisable to add Y₂O₃ as well as Al₂O₃ to approximate the thermal expansion coefficient of the adjustment layer to those of the support 2 and the interconnector 6. In this case, Y₂O₃ as well as Al₂O₃ is preferably contained in an amount of 10% to 50% by mole relative to the oxide of Ni and Mg. This makes it possible to approximate the thermal expansion coefficient of the adjustment layer 9 to those of the support 2 and the interconnector 6. Note that the adjustment layer 9 including oxide of Ni and Mg as a major constituent means that the adjustment layer 9 contains oxide of Ni and Mg in an amount of greater than or equal to 50% by mole. As described above, Y₂O₃ as well as Al₂O₃ can be contained as additional components.

Since oxide of Ni and Mg has a low electrical conductivity, as has already been described, it is desirable to dispose the adjustment layer 9 in such a manner that the sum of the widths (aw) of the adjustment layers 9 in the direction of arrangement of the gas flow channels 7 is equal to one-tenth to one-half part of the width (w) of the other main surface 18 in a direction aligned with the direction of arrangement of the gas flow channels 7.

Occurrence of shrinkage in a reduction atmosphere means that a sintered body undergoes volumetric shrinkage upon exposure to a reduction atmosphere. Occurrence of expansion in a reduction atmosphere means that a sintered body undergoes volumetric expansion upon exposure to a reduction atmosphere.

Evaluation of the degree of reduction-induced shrinkage as well as reduction-induced expansion of the adjustment layer 9 is conducted as follows. A sintered body having predetermined size corresponding to the constituent of the adjustment layer 9 is prepared, and the length, thickness and width of the sintered body in a yet-to-be-reduced state are measured by means of vernier caliper or otherwise. Subsequently, the sintered body is subjected to reduction treatment, and the dimensions of the reduced sintered body are measured in a like manner. The reduction treatment refers to a 10-hour exposure to a reduction atmosphere generated by the passage of hydrogen at a temperature of 850°C. A value obtained by dividing the volume of the yet-to-be-reduced sintered body by the volume of the reduced sintered body can be defined as a reduction-induced deformation rate. When the reduction-induced deformation rate takes on a positive value, it can be judged that the adjustment layer 9 shrinks in a reduction atmosphere. On the other hand, when the reduction-induced deformation rate takes on a negative value, it can be judged that the adjustment layer 9 expands in a reduction atmosphere. The foregoing evaluation method holds for the interconnector 6, and thus the reduction-induced deformation rate of the interconnector 6 can be obtained from the measurement of a sintered body corresponding to the constituent of the interconnector 6. Also in this case, when the reduction-induced deformation rate takes on a positive value, it can be judged that the interconnector 6 shrinks in a reduction atmosphere. On the other hand, when the reduction-induced deformation rate takes on a negative value, it can be judged that the interconnector 6 expands in a reduction atmosphere.

It is noted that, in the interest of, for example, reduction of the difference in thermal expansion coefficient between the interconnector 6 and the support 2, an adherent layer (not shown in the figures) can be formed on the other main surface 18 of the support 2 so as to lie between the support 2 and the interconnector 6. The adherent layer is made of at least one of rare earth oxide, ZrO₂ solid solution containing a rare earth element, and CeO₂ solid solution containing a rare earth element, and at least one of Ni and NiO.

Moreover, while the fuel cell 1, 10, 11 is illustrated as having the adjustment layer 9 formed so as to extend from one end to the other end of the support 2 in its lengthwise direction, another configuration can be adopted for use. For example, instead of being formed so as to extend from one end to the other end of the support 2, the adjustment layer 9 can be severed at a lengthwise midportion of the support 2; that is, two separate adjustment layers can be disposed in the lengthwise direction. Further, while Figs. 1 to 3 show an example having either a single adjustment layer 9 or two adjustment layers 9, three or more adjustment layers 9 can be disposed. For example, a plurality of adjustment layers 9 can be spaced apart in stripe arrangement in the direction of width of the support 2. By arranging the adjustment layers 9 at a predetermined distance, it is possible to prevent deterioration in the electrical conductivity of the interconnector 6.

In another alternative, which is not part of the present invention, the adjustment layer 9 can be so disposed as to extend from one end to the other end of the support 2 in its widthwise direction. Also in this case, deformation resulting from reduction-induced expansion or reduction-induced shrinkage of the interconnector 6 can be suppressed. Moreover, also in this case, it is desirable to provide a plurality of adjustment layers 9 that are spaced apart in the direction of length of the support 2. This makes it possible to suppress deterioration in the electrical conductivity of the interconnector 6.

The adjustment layer 9 does not necessarily have to be given a rectilinear shape. For example, it can be given a curvilinear shape, or can be formed in a mesh or dot pattern. Also in such cases, the reduction-induced shrinkage or reduction-induced expansion of the adjustment layer 9 helps suppress the reduction-induced expansion or reduction-induced shrinkage of the interconnector 6.

Now, a description will be given as to a method of manufacturing the fuel cell 1 thus far described.

To begin with, powder of at least one of Ni and NiO, powder of rare earth oxide such as Y₂O₃, an organic binder, and a solvent are mixed together to prepare a porcelain base material. The porcelain base material is subjected to extrusion molding process to form a preformed product of the support, and the support preformed product is dried. Note that, as the support preformed product, a calcined product obtained by calcining the support preformed product for 2 to 6 hours at a temperature in a range of 900°C to 1000°C can be used.

Next, for example, raw materials of NiO and ZrO₂ solid solution containing Y₂O₃ (YSZ) are subjected to weighing and mixing process in accordance with a predetermined preparation composition. After that, the resulting mixture powder is blended with an organic binder and a solvent, thereby preparing a slurry for the fuel electrode layer.

Moreover, a slurry-like material obtained by admixing toluene, a binder, a commercially available dispersant, and so forth in powder of ZrO₂ solid solution containing a rare earth element is formed into a sheet-shaped preformed product of the solid electrolyte layer having a thickness in a range of 7 µm to 75 µm by means of the doctor blade method or otherwise. Then, the slurry for the fuel electrode layer is applied on to the sheet-shaped solid-electrolyte-layer preformed product thus obtained to form a preformed product of a stacked body formed with a preformed product of the fuel electrode layer. The staked-body preformed product is placed on the support preformed product, with its side bearing the fuel electrode-layer preformed product facing down.

Subsequently, a preformed product of the intermediary layer which is placed between the solid electrolyte layer 4 and the air electrode layer 5 is formed.

For example, powder of CeO₂ solid solution containing GdO_{1.5} is heat-treated for 2 to 6 hours at a temperature in a range of 800°C to 900°C, and is whereafter wet-crushed, with the degree of agglomeration adjusted to fall within a range of 5 to 35, to prepare raw material powder for a preformed product of the intermediary layer. The wet-crushing process is preferably continued for 10 to 20 hours with use of a solvent by means of ball milling. Note that the above formation method holds for a case where the intermediary layer is made of powder of CeO₂ solid solution containing SmO_{1.5}.

Then, toluene is added, as a solvent, to the raw material powder for the intermediary-layer preformed product in which the degree of agglomeration has been adjusted properly, thereby preparing a slurry for the intermediary layer. The slurry is applied on to the solid-electrolyte-layer preformed product. In this way, a preformed product of the intermediary layer is formed. Alternatively, a sheet-shaped preformed product of the intermediary layer formed in advance can be placed on the solid-electrolyte-layer preformed product.

Subsequently, the material for the adjustment layer (strontium titanate), an organic binder, and a solvent are mixed together to prepare a slurry. By screen printing, the slurry is applied so as to cover the ends of the solid-electrolyte-layer preformed product and the fuel electrode-layer preformed product situated on the other main surface of the support preformed product.

After that, the material for the interconnector (for example, lanthanum chromite powder), an organic binder, and a solvent are mixed together to prepare a slurry. By screen printing, the slurry is applied on to the other main surface of the support preformed product of the stacked-body preformed product. Note that the interconnector preformed product is disposed, with its end along the direction of arrangement of the gas flow channels disposed in overlapping relation with the upper surface of the adjustment-layer preformed product.

Next, the above-described stacked-body preformed product is subjected to binder removal treatment, and is then co-sintered (co-fired) for 2 to 6 hours in an oxygen-containing atmosphere at a temperature in a range of 1400°C to 1600°C.

In the case where the intermediary layer 8 is composed of two layers, one of the intermediary layers located toward the air electrode layer is obtained by applying the above-described slurry for the intermediary layer to the upper surface of the co-fired other intermediary layer (the first layer), and then performing firing at a temperature of 200°C or greater lower than the temperature set for the co-firing process.

Next, a slurry containing the material for the air electrode layer (for example, LaSrCoFeO₃ powder), a solvent, and a pore-forming agent is applied on to the intermediary layer by means of dipping or otherwise. Moreover, on an as needed basis, a slurry containing the material for the P-type semiconductor layer (for example, LaCrO₃ powder) and a solvent is applied to a predetermined location of the interconnector 6 by means of dipping or otherwise, and is whereafter baked for 2 to 6 hours at a temperature in a range of 1000°C to 1300°C. In this way, the fuel cell 1 having the structure as shown in Fig. 1 can be produced. Note that the fuel cell 1 thus constructed is subjected to reduction treatment afterwards, more specifically, hydrogen gas is passed through the interior of the fuel cell 1 to reduce the support 2 and the fuel electrode layer 3. At this time, for example, the reduction treatment is preferably continued for 5 to 20 hours at a temperature in a range of 750°C to 1000°C.

By virtue of the provision of the adjustment layer 9 made of a sintered body composed predominantly of strontium titanate and the interconnector made of a sintered body composed predominantly of lanthanum chromite that are arranged on the other main surface 18 of the support 2, the fuel cell 1 thus produced becomes capable of suppression of deformation resulting from reduction treatment.

It is noted that the fuel cell 10 shown in Fig. 2(a) can be produced by the above-described manufacturing method, and that the fuel cell 11 shown in Fig. 2(b) can be produced by providing part of the material for the interconnector on the other main surface of the support preformed product by means of screen printing or otherwise, applying the adjustment-layer preformed product thereonto, and applying the material for the interconnector once again onto the adjustment-layer preformed product.

In the case of forming the adjustment layer 9 from oxide of Ni and Mg, NiO and MgO used as the material for the adjustment layer, an organic binder, and a solvent are mixed together to prepare a slurry. The slurry is then applied so as to cover the ends of the solid-electrolyte-layer preformed product and the fuel electrode-layer preformed product situated on the other main surface of the support preformed product by screen printing.

Further, in the case of providing the adjustment layer 9 in a mesh or dot pattern, the adjustment layer 9 can be obtained by screen printing using a mesh- or dot-patterned printing plate.

In an embodiment, which is not part of the invention, the interconnector 6 may undergo reduction-induced shrinkage when composed predominantly of strontium titanate. With the reduction-induced shrinkage, the fuel cell may be distorted to such an extent that its interconnector 6 side is concavely and arcuately curved. Should such a distortion be encountered, the fuel cell 1 may sustain damage such as cracking, and also accidental separation of the constituent members of the fuel cell 1 placed on the support 2 may take place.

In this regard, it is advisable to form the adjustment layer 9 from lanthanum chromite which undergoes reduction-induced expansion. In this case, the reduction-induced expansion of the adjustment layer 9 helps suppress the reduction-induced shrinkage of the interconnector 6, thereby protecting the fuel cell 1 from deformation. In the case of using lanthanum chromite for the adjustment layer 9, the above-described lanthanum chromite used for the interconnector 6 can be used.

That is, a combination of the adjustment layer 9 and the interconnector 6 needs to be so designed that they change in shape differently; that is, one of them expands and the other shrinks, during reduction. Thereby, the reduction-induced expansion or reduction-induced shrinkage of the adjustment layer 9 helps suppress the reduction-induced shrinkage or reduction-induced expansion of the interconnector 6.

Exemplary of a formula for the production of a fuel cell, which is not part of the present invention, having an interconnector which shrinks during reduction and an adjustment layer which expands during reduction are lanthanum chromite powder as the material for the adjustment layer, and strontium titanate powder as the material for the interconnector. This fuel cell can otherwise be produced in a manufacturing method similar to that as above described.

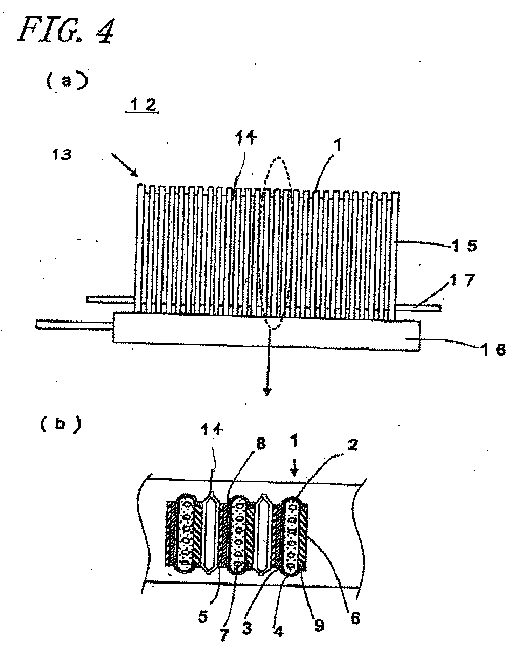

Fig. 4 shows an example of a fuel cell device 12 (hereafter also referred to as "cell stack device 12") composed of a plurality of the above-described fuel cells 1 electrically connected in series with each other via an electricity collecting member 14, wherein Fig. 4(a) is a side view schematically showing the cell stack device 12 and Fig. 4(b) is an enlarged plan view of part of the cell stack device 12 shown in Fig. 4(a) surrounded by a dotted circle. In Fig. 4(b), the part corresponding to the dotted circle of Fig. 4(a) is pointed by an arrow for the sake of clarity.

In the cell stack device 12, a cell stack 13 is constructed by arranging the fuel cells 1 in an upstanding state via the electricity collecting member 14, with the lower ends of the fuel cells 1 secured to a gas tank 16 for the supply of fuel gas to the fuel cells 1 by an adhesive such as a glass seal material. Moreover, an elastically deformable electrically conducting member 15, the lower end of which is secured to the gas tank 16, is disposed in sandwich style so that the cell stack 13 can be held at both ends via the electricity collecting member 14 in the direction of arrangement of the fuel cells 1.

Further, in the electrically conducting member 15 shown in Fig. 4, a current extraction portion 17 for extracting electric current resulting from electricity generation by the cell stack 13 (the fuel cells 1) is so disposed as to protrude outward along the direction of arrangement of the fuel cells 1.

In the cell stack device 12, the cell stack 13 is constructed of the fuel cells 1 capable of suppression of deformation as above described. This allows improvement of the cell stack device 12 in respect of long-term reliability.

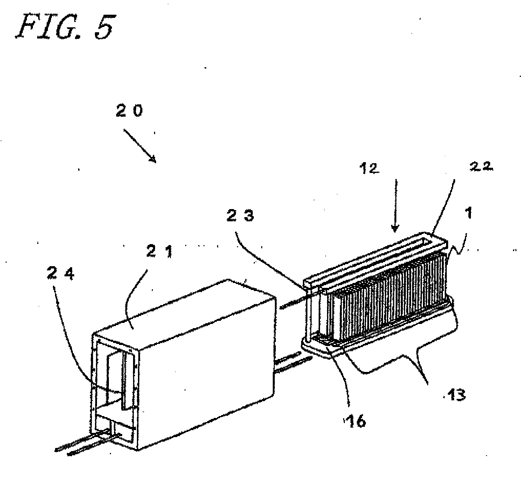

Fig. 5 is an external perspective view showing an example of a fuel cell module 20 constructed by placing the cell stack device 12 in a housing. The fuel cell module 20 is constructed by placing the cell stack device 12 as shown in Fig. 3 in a rectangular parallelepiped housing 21.

In order to obtain fuel gas for use in the fuel cell 1, a reformer 22 configured to generate fuel gas by reforming raw fuel such as natural gas and kerosene is disposed above the cell stack 13. The fuel gas generated by the reformer 22 is fed to the gas tank 16 through a gas passage tube 23, and from there to the gas flow channel 7 disposed within the fuel cell 1.

Note that, Fig. 5 shows a state where parts (front and rear surfaces) of the housing 21 are removed, and the cell stack device 12 and the reformer 22, which are to be accommodated in the housing 21, lie just behind the housing 21. In the fuel cell module 20 shown in Fig. 5, the cell stack device 12 can be slidably housed in the housing 21. Note that, the cell stack device 12 can include the reformer 22.

Moreover, an oxygen-containing gas admitting member 24 disposed within the housing 21 is interposed between the cell stacks 13 arranged side by side on the gas tank 16 in Fig. 5, for allowing oxygen-containing gas to flow laterally of the fuel cells 1 in a direction from the lower end to the upper end in step with the flow of fuel gas, so that the oxygen-containing gas can be fed to the lower ends of the fuel cells 1. As the fuel gas discharged from the fuel gas flow channel of the fuel cell 1 and the oxygen-containing gas are burned at the side of the upper end of the fuel cell 1, the temperature of the fuel cell 1 is raised, thereby facilitating start-up of the cell stack device 12. Moreover, by burning the fuel gas discharged from the gas flow channel 7 of the fuel cell 1 and the oxygen-containing gas at the side of the upper end of the fuel cell 1, it is possible to warm the reformer 22 disposed above the fuel cell 1 (the cell stack 13) efficiently, and thereby initiate a reforming reaction in the reformer 22 efficiently.

Also, in the fuel cell module 20, the cell stack device 12 composed of the fuel cells 1 designed for higher long-term reliability is placed in the housing 21. This construction allows improvement of the fuel cell module 20 in respect of long-term reliability.

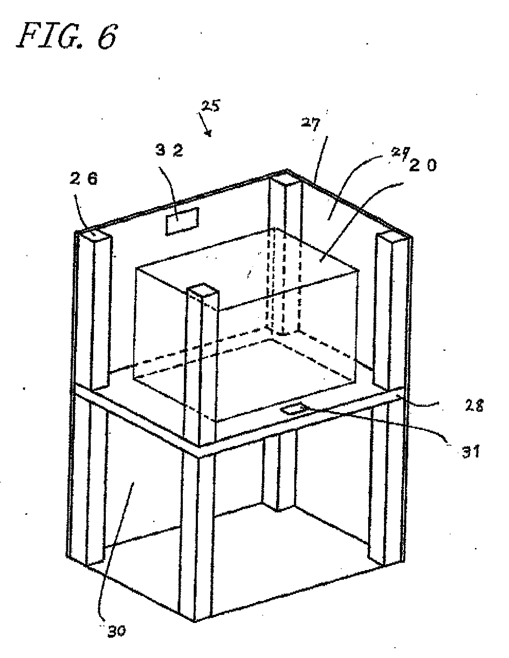

Fig. 6 is an exploded perspective view showing one embodiment of a fuel cell apparatus including the fuel cell module 20 shown in Fig. 5, and auxiliary machines configured to operate the cell stack device 12, and an external case, the fuel cell module 20 and the auxiliary machines being placed in the external case. In Fig. 6, part of the structure of the apparatus is omitted.

In the fuel cell apparatus 25 shown in Fig. 6, the interior of the external case composed of a support column 26 and an exterior plate 27 is divided into an upper region and a lower region by a partition plate 28. The upper region constitutes a module housing chamber 29 configured to house the above-described fuel cell module 20, whereas the lower region constitutes an auxiliary housing chamber 30 configured to house auxiliary machines for operating the fuel cell module 20. The auxiliary machines housed in the auxiliary housing chamber 30 are not shown in the figure.

Moreover, the partition plate 28 is provided with an air passage port 31 configured to allow air existing in the auxiliary housing chamber 30 to flow toward the module housing chamber 29. Further, an air discharge port 32 configured to discharge air existing in the module housing chamber 29 is disposed in part of the exterior plate 27 constituting the module housing chamber 29.

In such a fuel cell apparatus 25, as has already been described, the fuel cell module 20 designed for higher long-term reliability is placed in the module housing chamber 29. This construction allows improvement of the fuel cell apparatus 25 in respect of long-term reliability.

While the invention has thus far been particularized, the invention is not limited to the embodiments as described hereinabove, and therefore various changes and modifications may be made without departing from the spirit and scope of the claimed invention.

For example, while, in the above-described examples, the fuel cell 1 is illustrated as having the form of a hollow flat plate, the fuel cell can be cylindrically shaped. Moreover, the above description deals with the construction in which the inner electrode is defined as the fuel electrode layer 3 for passage of fuel gas through the interior of the gas flow channel 7, and the outer electrode is defined as the air electrode layer 5 for passage of oxygen-containing gas externally of the fuel cell. However, it is possible to adopt a construction in which the inner electrode is defined as the air electrode layer 5 for passage of oxygen-containing gas through the interior of the gas flow channel 7, and the outer electrode is defined as the fuel electrode layer 3 for passage of fuel gas externally of the fuel cell.

### Example 1

To begin with, NiO powder having an average particle size of 0.5 µm and Y₂O₃ powder having an average particle size of 0.9 µm were mixed in such a manner that the proportion of NiO becomes 48% by volume and the proportion of Y₂O₃ becomes 52% by volume after firing-reduction process. The mixture, together with an organic binder and a solvent, was formed into a porcelain base material. The porcelain base material was molded by the extrusion molding technique, whereafter subjected to drying and degreasing treatment. In this way, a preformed product of the support was formed.

Next, a slurry, which was prepared by mixing powder of ZrO₂ solid solution containing Y in an amount of 8% by mole, the particle size of which is 0.8 µm (measured by Micro-track method) (raw-material powder for the solid electrolyte layer), an organic binder, and a solvent, was shaped into a 30 µm-thick sheet for the solid electrolyte layer by the doctor blade method.

Next, a slurry for the fuel electrode layer was prepared by mixing powder of NiO having an average particle size of 0.5 µm, powder of ZrO₂ solid solution containing Y₂O₃, an organic binder, and a solvent. The slurry for the fuel electrode layer was applied on to the sheet for the solid electrolyte layer to form a preformed product of the staked body formed with a preformed product of the fuel electrode layer. The staked-body preformed product was placed so as to extend from one of the main surfaces of the support preformed product to the other main surface, with its side bearing the fuel electrode-layer preformed product facing down.

Subsequently, the stacked-body preformed product formed of a stack of the fuel electrode-layer preformed product and the solid-electrolyte-layer preformed product as above described was calcined for 3 hours at a temperature of 1000°C.

Next, composite oxide containing CeO₂ in an amount of 85% by mole and another rare earth oxide (GdO_{1.5}) in an amount of 15% by mole was pulverized in the presence of isopropyl alcohol (IPA) as a solvent by a vibration mill or a ball mill, and whereafter calcined for 4 hours at a temperature of 900°C. The calcined particles were crushed once again by the ball mill while adjusting the degree of agglomeration of ceramic particles properly, thereby preparing raw material powder for the intermediary layer. An acrylic binder and toluene were admixed in the powder to form a slurry for the intermediary layer. The slurry was applied on to the calcined solid-electrolyte-layer preformed product of the calcined stacked-body preformed product by screen printing. In this way, a preformed product of the intermediary layer was prepared.

Subsequently, a slurry for the adjustment layer prepared by mixing LaSrTiO₃ powder, an organic binder, and a solvent was applied by screen printing for formation of a preformed product of the adjustment layer. Note that, in forming Samples Nos. 1 through 3 and 6 through 8, the slurry application was conducted so that the adjustment-layer preformed product covers the ends of the solid-electrolyte-layer preformed product and the fuel electrode-layer preformed product situated on the other main surface of the support preformed product (listed as "both ends" in Table 1). Moreover, in forming Sample No. 4, the slurry application was conducted so that the adjustment-layer preformed product lies coveringly over a midportion of the other main surface of the support preformed product in the direction of arrangement of the gas flow channels (listed as "midportion" in Table 1). At this time, the sum of the widths of the adjustment-layer preformed products arranged in the direction of arrangement of the gas flow channels was adjusted to take on the value as listed in Table 1.

Subsequently, a slurry for the interconnector prepared by mixing LaCr0₃ powder, an organic binder, and a solvent was applied on to the other main surface of the support preformed product in such a manner that each end of the interconnector can be situated on the adjustment-layer preformed product by screen printing. In this way, a preformed product of the interconnector was prepared.

In forming Sample No. 5, following the completion of application of the slurry for the interconnector to the other main surface of the support preformed product by screen printing, the slurry for the adjustment layer was so applied as to lie over a midportion of the support preformed product in the direction of arrangement of the gas flow channels by screen printing. After that, the slurry for the interconnector was applied once again (listed as "interior" in Table 1).

Then, the samples each having a layer-stack structure have been co-fired for 2 hours in the atmosphere at a temperature of 1480°C. Note that 10 fuel cells were prepared with respect to each sample.

Next, a liquid mixture was prepared from LaSrCoFeO₃ powder having an average particle size of 2 µm and isopropyl alcohol. The liquid mixture was sprayed on the surface of the intermediary layer of the sintered stacked body to form a preformed product of the air electrode layer. The air electrode-layer preformed product has been baked for 2 hours at a temperature of 1100°C, thereby forming the air electrode layer. In this way, the fuel cells having the structures as listed in Table 1 were prepared.

The fuel cell thus prepared had a dimension of 30 mm by 200 mm. The thickness of the support (the dimension of the region between the main surfaces n) was 2 mm, and the porosity thereof was 35%. The thickness of the fuel electrode layer was 10 µm, and the porosity thereof was 24%. The thickness of the air electrode layer was 50 µm, and the porosity thereof was 40%. The relative density of the solid electrolyte layer was 97%.

Hydrogen gas was passed through the interior (gas flow channel) of each of the fuel cells thus produced to perform reduction treatment on the support and the fuel electrode layer. The reduction treatment was continued for 10 hours at a temperature of 850°C. At that time, the condition of each cell was checked for signs of warpage before and after the reduction, and warpage measurement was conducted thereon by a surface roughness meter for determination of the amount of deformation.

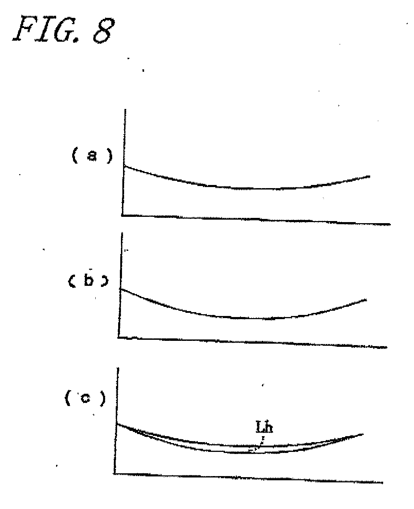

The measurement was carried out as follows. After setting the fuel cell on its side with the interconnector facing down, the surface roughness of the cell, excluding a part located within a range of 10 mm from each end, was measured longitudinally along the central axis of the fuel cell in its widthwise direction (the direction of arrangement of the gas flow channels). A curve obtained as the result of the measurement was defined as a profile curve. On the basis of the profile curve, as shown in Figs. 8(a) and 8(b), warpage curves were obtained before and after the reduction treatment. Then, as shown in Fig. 8(c), the before-reduction warpage curve and the after-reduction warpage curve were placed in superposed relation with the ends in registry. With a part of maximum width defined as warpage (Lh), the mean value of all the data on the cells of each sample was determined by measurement. The derived values are listed in Table 1.

In the fuel cells thus obtained, fuel gas was passed into the fuel gas flow channels, and oxygen-containing gas has been passed externally of the cells. Then, the fuel cells was heated to 750°C in an electric furnace. Tests of electricity generation have been performed under these conditions to examine output density after a lapse of three hours.

**Table 1**

| Sample No. | Location of adjustment layer | Sum of widths of adjustment layers (mm) | Sum of adjustment-layer widths/Width of support main surface | Warpage Lh (µm) | Output density W/cm² |
|---|---|---|---|---|---|
| 1 | Both ends | 1 | 1/30 | 120 | 0.245 |
| 2 | Both ends | 3 | 1/10 | 100 | 0.244 |
| 3 | Both ends | 5 | 1/6 | 80 | 0.243 |
| 4 | Midportion | 5 | 1/6 | 80 | 0.242 |
| 5 | Interior | 5 | 1/6 | 80 | 0.243 |
| 6 | Both ends | 10 | 1/3 | 60 | 0.241 |
| 7 | Both ends | 15 | 1/2 | 50 | 0.240 |
| 8 | Both ends | 20 | 2/3 | 40 | 0.235 |
| *9 | - | - | - | 300 | 0.245 |

| | | | | | |
|---|---|---|---|---|---|
| Asterisk (*) denotes departure from the scope of the invention | | | | | |

As will be understood from the results listed in Table 1, in Sample No. 9 devoid of the adjustment layer, the value of warpage Lh is as large as 300 µm. On the other hand, in Samples Nos. 1 through 8 provided with the adjustment layer, the values of warpage Lh range downwardly from 120 µm. That is, the samples have proven that they are capable of warpage suppression. In particular, in Samples Nos. 2 through 6 in which the values of the sum of adjustment-layer widths (widths in the direction of arrangement of the gas flow channels)/the width of support main surface (width in the direction of arrangement of the gas flow channels) range between 1/10 to 1/2, the values of warpage Lh range downwardly from 100 µm, and the values of output density range upwardly from 0.240 W/cm². That is, the samples have proven that they are capable of suppressing deformation of the fuel cell, as well as suppressing a decrease in the efficiency of electricity collection by the interconnector.

### Example 2

In a manner similar to that as adopted for Example 1, a preformed product of the intermediary layer was prepared on the calcined solid-electrolyte-layer preformed product.

Next, MgO powder and NiO powder were mixed to obtain a mixture in which the ratio of MgO to NiO is 50 to 10 in terms of mole ratio. In the case of adding Y₂O₃ powder or Al₂O₃ powder to the mixture, the raw materials were mixed to prepare powder for the adjustment layer in which the sum of MgO powder and NiO powder and Y₂O₃ powder or Al₂O₃ powder stand at a mole ratio as given in Table 2. A slurry for the adjustment layer prepared by mixing the powder for the adjustment layer, an organic binder, and a solvent was applied by screen printing in such a manner that a resulting preformed product of the adjustment layer can be formed, in a width as listed in Table 2, at the midportion as referred to in Table 1.

Then, in a manner similar to that as adopted for Example 1, the amount of deformation and output density of each fuel cell were measured.

A fuel cell having output density of less than or equal to 70% of the output density of another fuel cell was examined at its section by SEM (scanning-type electron microscope) to check the presence or absence of accidental separation between the interconnector and the support. A sign of the presence of separation was judged to be indicative of occurrence of separation between the interconnector and the support. Note that output density has been calculated from the whole examination population, except for the fuel cells that suffered from separation.

**Table 2**

| Sample No. | Interconnector composition | Constituents of adjustment layer | | Mole ratio of adjustment-layer constituents | Sum of widths of adjustment layers (mm) | Sum of adjustment-layer widths/Width of support main surface | Warpage Lh (µm) | Output density W/cm² | Presence of interconnector separation |
|---|---|---|---|---|---|---|---|---|---|
| 10 | LaCr0₃ | MgNi | - | 100:0 | 5 | 1/6 | 70 | 0.242 | 1/10 |
| 11 | LaCr0₃ | MgNi | Al₂O₃ | 90:10 | 3 | 1/10 | 110 | 0.245 | 0/10 |
| 12 | LaCr0₃ | MgNi | Al₂O₃ | 80:20 | 5 | 1/6 | 60 | 0.242 | 0/10 |
| 13 | LaCr0₃ | MgNi | Y₂O₃ | 70:30 | 5 | 1/6 | 70 | 0.243 | 0/10 |
| 14 | LaCr0₃ | MgNi | Y₂O₃ | 60:40 | 10 | 1/3 | 60 | 0.241 | 0/10 |
| 15 | LaCr0₃ | MgNi | Y₂O₃ | 55:45 | 15 | 1/2 | 50 | 0.241 | 0/10 |
| 16 | LaCr0₃ | MgNi | Y₂O₃ | 50:50 | 20 | 2/3 | 40 | 0.235 | 0/10 |

As will be understood from the results listed in Table 2, in Samples Nos. 10 through 16 provided with the adjustment layer containing oxide of Mg and Ni, the values of warpage of the fuel cells range downwardly from 110 µm. That is, the samples succeeded in suppressing warpage in the fuel cells effectively.

Moreover, in Samples Nos. 11 through 16 containing Y₂O₃ or Al₂O₃, there is no fuel cell that suffered from separation between the interconnector and the support. It has thus been confirmed that the addition of Y₂O₃ or Al₂O₃ helps suppress accidental separation between the interconnector and the support.

### Reference Signs List

- 1, 10, 11:: Fuel cell
- 2:: Support
- 3:: Fuel electrode layer
- 4:: Solid electrolyte layer
- 5:: Air electrode layer
- 6:: Interconnector
- 7:: Gas flow channel
- 9:: Adjustment layer
- 12:: Fuel cell device
- 20:: Fuel cell module
- 25:: Fuel cell apparatus

## Claims

1. A fuel cell, comprising:
a support having gas flow channels which are disposed in an interior of the support, for passage of fuel gas along its lengthwise direction, the support being shaped into a flat plate having a pair of opposed main surfaces;
a fuel electrode layer, a solid electrolyte layer and an air electrode layer which are disposed on one main surface of the pair of opposed main surfaces of the support in the order named;
an interconnector made of a sintered body composed predominantly of lanthanum chromite, the interconnector being disposed on the other main surface of the pair of opposed main surfaces of the support; and
an adjustment layer made of a sintered body composed predominantly of perovskite-type oxide containing Ti or a sintered body composed predominantly of oxide of Ni and Mg, the adjustment layer being placed in only part of a region lying between the interconnector and the support, the area in which the adjustment layer is placed being only at each end of the other main surface in its widthwise direction.

2. A fuel cell, comprising:
a support having gas flow channels which are disposed in an interior of the support, for passage of fuel gas along its lengthwise direction, the support being shaped into a flat plate having a pair of opposed main surfaces;
a fuel electrode layer, a solid electrolyte layer and an air electrode layer which are disposed on one main surface of the pair of opposed main surfaces of the support in the order named;
an interconnector made of a sintered body composed predominantly of lanthanum chromite, the interconnector being disposed on the other main surface of the pair of opposed main surfaces of the support; and
an adjustment layer made of a sintered body composed predominantly of perovskite-type oxide containing Ti or a sintered body composed predominantly of oxide of Ni and Mg, the adjustment layer being placed in only part of a region lying between the interconnector and the support, the area in which the adjustment layer is placed being only in a midportion of the other main surface in its widthwise direction.

3. A fuel cell, comprising:
a support having gas flow channels which are disposed in an interior of the support, for passage of fuel gas along its lengthwise direction, the support being shaped into a flat plate having a pair of opposed main surfaces;
a fuel electrode layer, a solid electrolyte layer and an air electrode layer which are disposed on one main surface of the pair of opposed main surfaces of the support in the order named;
an interconnector made of a sintered body composed predominantly of lanthanum chromite, the interconnector being disposed on the other main surface of the pair of opposed main surfaces of the support; and
an adjustment layer made of a sintered body composed predominantly of perovskite-type oxide containing Ti or a sintered body composed predominantly of oxide of Ni and Mg, the adjustment layer being placed in only an inside of the interconnector, the area in which the adjustment layer is placed being only in a midportion of the other main surface in its widthwise direction.

4. The fuel cell according to any one of claims 1 to 3,
wherein the adjustment layer is made of a sintered body composed predominantly of perovskite-type oxide containing Ti, and at least one of La, Y, Sr, and Nb is solid-solved in the perovskite-type oxide containing Ti.

5. The fuel cell according to any one of claims 1 to 3,
wherein the adjustment layer is made of a sintered body composed predominantly of oxide of Ni and Mg, and the sintered body composed predominantly of oxide of Ni and Mg contains Y₂O₃ or Al₂O₃.

6. The fuel cell according to any one of claims 1 to 3,
wherein a sum of widths of the adjustment layers in a widthwise direction of the support is equal to one-tenth to one-half part of a width of the other main surface.

7. A fuel cell device, comprising:
a plurality of the fuel cells according to any one of claims 1 to 6, electrically connected in series.

8. A fuel cell module, comprising:
the fuel cell device according to claim 7; and
a housing,
the fuel cell device being placed in the housing.

9. A fuel cell apparatus, comprising:
the fuel cell module according to claim 8;
an auxiliary machine configured to operate the fuel cell module;
an external case,
the fuel cell module and the auxiliary machine being placed in the external case.

## Patentansprüche

1. Eine Brennstoffzelle, aufweisend:
eine Stütze, die Gasströmungskanäle aufweist, die in einem Inneren der Stütze angeordnet sind, zum Strömen von Brenngas entlang ihrer Längsrichtung, wobei die Stütze zu einer flachen Platte mit einem Paar entgegengesetzter Hauptflächen geformt ist,
eine Brennstoffelektrodenschicht, eine Festelektrolytschicht und eine Luftelektrodenschicht, die in der angegebenen Reihenfolge auf einer Hauptfläche des Paares von entgegengesetzten Hauptflächen der Stütze angeordnet sind,
einen Verbinder, der aus einem Sinterkörper hergestellt ist, der hauptsächlich aus Lanthanchromit zusammengesetzt ist, wobei der Verbinder auf der anderen Hauptfläche des Paares von einander entgegengesetzten Hauptflächen der Stütze angeordnet ist, und
eine Anpassungsschicht, die aus einem Sinterkörper, der hauptsächlich aus einem Ti enthaltenden Oxid des Perovskit-Typs zusammengesetzt ist, oder einem Sinterkörper, der hauptsächlich aus Ni- und Mg-Oxid zusammengesetzt ist, hergestellt ist, wobei die Anpassungsschicht nur in einem einzigen Teil eines Bereichs angeordnet ist, der zwischen dem Verbinder und der Stütze liegt, wobei das Gebiet, in dem die Anpassungsschicht angeordnet ist, sich nur an jedem Ende der anderen Hauptfläche in ihrer Breitenrichtung befindet.

2. Eine Brennstoffzelle, aufweisend:
eine Stütze, die Gasströmungskanäle aufweist, die in einem Inneren der Stütze angeordnet sind, zum Strömen von Brenngas entlang ihrer Längsrichtung, wobei die Stütze zu einer flachen Platte mit einem Paar entgegengesetzter Hauptflächen geformt ist,
eine Brennstoffelektrodenschicht, eine Festelektrolytschicht und eine Luftelektrodenschicht, die in der angegebenen Reihenfolge auf einer Hauptfläche des Paares von entgegengesetzten Hauptflächen der Stütze angeordnet sind,
einen Verbinder, der aus einem Sinterkörper hergestellt ist, der hauptsächlich aus Lanthanchromit zusammengesetzt ist, wobei die Der Verbinder auf der anderen Hauptfläche des Paares von einander entgegengesetzten Hauptflächen der Stütze angeordnet ist, und
eine Anpassungsschicht, die aus einem Sinterkörper, der hauptsächlich aus einem Ti enthaltenden Oxid des Perovskit-Typs zusammengesetzt ist, oder einem Sinterkörper, der hauptsächlich aus Ni- und Mg-Oxid zusammengesetzt ist, hergestellt ist, wobei die Anpassungsschicht nur in einem Teil eines Bereichs angeordnet ist, der zwischen dem Verbinder und der Stütze liegt, wobei das Gebiet, in dem die Anpassungsschicht angeordnet ist, sich nur in einem mittleren Abschnitt der anderen Hauptfläche in ihrer Breitenrichtung befindet.

3. Eine Brennstoffzelle, aufweisend:
eine Stütze, die Gasströmungskanäle aufweist, die in einem Inneren der Stütze angeordnet sind, zum Strömen von Brenngas entlang ihrer Längsrichtung, wobei die Stütze zu einer flachen Platte mit einem Paar entgegengesetzter Hauptflächen geformt ist,
eine Brennstoffelektrodenschicht, eine Festelektrolytschicht und eine Luftelektrodenschicht, die in der angegebenen Reihenfolge auf einer Hauptfläche des Paares von entgegengesetzten Hauptflächen der Stütze angeordnet sind,
einen Verbinder, der aus einem Sinterkörper hergestellt ist, der hauptsächlich aus Lanthanchromit zusammengesetzt ist, wobei die Der Verbinder auf der anderen Hauptfläche des Paares von einander entgegengesetzten Hauptflächen der Stütze angeordnet ist, und
eine Anpassungsschicht, die aus einem Sinterkörper, der hauptsächlich aus einem Ti enthaltenden Oxid des Perovskit-Typs zusammengesetzt ist, oder einem Sinterkörper, der hauptsächlich aus Ni- und Mg-Oxid zusammengesetzt ist, hergestellt ist, wobei die Anpassungsschicht nur in einem Inneren dem Verbinder angeordnet ist, wobei sich das Gebiet Bereich, in dem die Anpassungsschicht angeordnet ist, lediglich in einem mittleren Abschnitt der anderen Hauptfläche in ihrer Breitenrichtung befindet.

4. Die Brennstoffzelle gemäß irgendeinem der Ansprüche 1 bis 3,
wobei die Anpassungsschicht aus einem Sinterkörper hergestellt ist, der hauptsächlich aus einem Ti enthaltenden Oxid des Perovskit-Typs zusammengesetzt ist, und wobei mindestens eines von La, Y, Sr und Nb in dem Ti enthaltenden Oxid des Perovskit-Typs Feststoff-gelöst ist.

5. Die Brennstoffzelle gemäß irgendeinem der Ansprüche 1 bis 3,
wobei die Anpassungsschicht aus einem Sinterkörper hergestellt ist, der hauptsächlich aus Ni- und Mg-Oxid zusammengesetzt ist, und wobei der hauptsächlich aus Ni- und Mg-Oxid zusammengesetzte Sinterkörper Y₂O₃ oder Al₂O₃ enthält.

6. Die Brennstoffzelle gemäß irgendeinem der Ansprüche 1 bis 3,
wobei eine Summe von Breiten der Anpassungsschichten in einer Breitenrichtung der Stütze gleich einem Zehntel bis einem halben Teil einer Breite der anderen Hauptfläche ist.

7. Eine Brennstoffzellenvorrichtung, aufweisend:
eine Mehrzahl der Brennstoffzellen gemäß irgendeinem der Ansprüche 1 bis 6, die elektrisch in Reihe geschaltet sind.

8. Ein Brennstoffzellenmodul, aufweisend:
die Brennstoffzellenvorrichtung gemäß Anspruch 7 und ein Gehäuse,
wobei die Brennstoffzellenvorrichtung in dem Gehäuse angeordnet ist.

9. Eine Brennstoffzellenvorrichtung, aufweisend:
das Brennstoffzellenmodul gemäß Anspruch 8,
eine Hilfsmaschine, die eingerichtet ist, um das Brennstoffzellenmodul zu betreiben,
ein externes Gehäuse,
wobei das Brennstoffzellenmodul und die Hilfsmaschine in dem externen Gehäuse angeordnet sind.

## Revendications

1. Une pile à combustible, comportant :
un support ayant des canaux d'écoulement de gaz disposés à un intérieur du support, pour le passage de gaz combustible le long de sa direction longitudinale, le support étant formé en une plaque plate ayant une paire de surfaces principales opposées,
une couche d'électrode de combustible, une couche d'électrolyte solide et une couche d'électrode à air disposées dans l'ordre énoncé sur une surface principale de la paire de surfaces principales opposées du support,
une interconnexion faite d'un corps fritté principalement constitué de chromite de lanthane, l'interconnexion étant disposée sur l'autre surface principale de la paire de surfaces principales opposées du support, et
une couche d'ajustement faite d'un corps fritté principalement constitué d'oxyde de type pérovskite contenant du Ti ou d'un corps fritté principalement constitué d'oxyde de Ni et Mg, la couche d'ajustement n'étant située que dans une partie d'une région disposée entre l'interconnexion et le support, le domaine dans lequel la couche d'ajustement est positionnée n'étant qu'à chaque extrémité de l'autre surface principale dans sa direction de largeur.

2. Une pile à combustible, comportant :
un support ayant des canaux d'écoulement de gaz disposés à un intérieur du support, pour le passage de gaz combustible le long de sa direction longitudinale, le support étant formé en une plaque plate ayant une paire de surfaces principales opposées,
une couche d'électrode de combustible, une couche d'électrolyte solide et une couche d'électrode à air disposées dans l'ordre énoncé sur une surface principale de la paire de surfaces principales opposées du support,
une interconnexion faite d'un corps fritté principalement constitué de chromite de lanthane, l'interconnexion étant disposée sur l'autre surface principale de la paire de surfaces principales opposées du support, et
une couche d'ajustement faite d'un corps fritté principalement constitué d'oxyde de type pérovskite contenant du Ti ou d'un corps fritté principalement constitué d'oxyde de Ni et Mg, la couche d'ajustement n'étant située que dans une partie d'une région disposée entre l'interconnexion et le support, le domaine dans lequel la couche d'ajustement est positionnée n'étant que dans une partie intermédiaire de l'autre surface principale dans sa direction de largeur.

3. Une pile à combustible, comportant :
un support ayant des canaux d'écoulement de gaz disposés à un intérieur du support, pour le passage de gaz combustible le long de sa direction longitudinale, le support étant formé en une plaque plate ayant une paire de surfaces principales opposées,
une couche d'électrode de combustible, une couche d'électrolyte solide et une couche d'électrode à air disposées dans l'ordre énoncé sur une surface principale de la paire de surfaces principales opposées du support,
une interconnexion faite d'un corps fritté principalement constitué de chromite de lanthane, l'interconnexion étant disposée sur l'autre surface principale de la paire de surfaces principales opposées du support, et
une couche d'ajustement faite d'un corps fritté principalement constitué d'oxyde de type pérovskite contenant du Ti ou d'un corps fritté principalement constitué d'oxyde de Ni et Mg, la couche d'ajustement n'étant située qu'à un intérieur de l'interconnexion, le domaine dans lequel la couche d'ajustement est positionnée n'étant que dans une partie intermédiaire de l'autre surface principale dans sa direction de largeur.

4. La pile à combustible selon l'une quelconque des revendications 1 à 3,
dans laquelle la couche d'ajustement est faite d'un corps fritté principalement constitué d'oxyde de type pérovskite contenant du Ti, et dans laquelle au moins un de La, Y, Sr et Nb est dissous sous forme solide dans l'oxyde de type pérovskite contenant du Ti.

5. La pile à combustible selon l'une quelconque des revendications 1 à 3,
dans laquelle la couche d'ajustement est faite d'un corps fritté principalement constitué d'oxyde de Ni et Mg, et le corps fritté principalement constitué d'oxyde de Ni et Mg comprend Y₂O₃ ou Al₂O₃.

6. La pile à combustible selon l'une quelconque des revendications 1 à 3,
dans laquelle une somme de largeurs des couches d'ajustement dans un sens de largeur du support est égale à une dixième partie à une demi-partie d'une largeur de l'autre surface principale.

7. Un dispositif de pile à combustible, comportant :
une pluralité des piles à combustible selon l'une quelconque des revendications 1 à 6, reliées électriquement en série.

8. Un module de pile à combustible, comportant :
le dispositif de pile à combustible selon la revendication 7, et
un boîtier,
le dispositif de pile à combustible étant placé dans le boîtier.

9. Un appareil de pile à combustible, comportant :
le module de pile à combustible selon la revendication 8,
une machine auxiliaire configurée de manière à actionner le module de pile à combustible,
un boîtier externe,
le module de pile à combustible et la machine auxiliaire étant placés dans le boîtier externe.
